# EUROPÄISCHE PATENTSCHRIFT

(11) **EP 4 094 955 B1**
(45) Veröffentlichungstag und Bekanntmachung des Hinweises auf die Patenterteilung: **07.10.2026**
(21) Anmeldenummer: 22173077.3
(22) Anmeldetag: 12.05.2022
(51) Int. Cl.: B30B 15/10, F16D 55/40, F16D 59/02, F16D 65/18

(54) **PRESSE**
PRESS
PRESSE

(30) Priorität: 21.05.2021 DE 102021113348
(43) Veröffentlichungstag der Anmeldung: 30.11.2022
(73) Patentinhaber: Nidec DESCH Antriebstechnik GmbH & Co. KG, 59759 Arnsberg (DE)
(72) Erfinder: WINIARSKI, Udo, 58802 Balve (DE)
(74) Vertreter: Fritz Patent- und Rechtsanwälte PartmbB

(56) Entgegenhaltungen:
- DE-A1- 102014 115 238
- DE-A1- 3 034 190
- US-A- 3 946 840

## Beschreibung

Die vorliegende Erfindung betrifft eine Presse gemäß dem Oberbegriff des Anspruchs 1.

Aus dem Stand der Technik sind Bremsvorrichtungen mit sogenannten nasslaufenden Reibbelägen bekannt. Bei diesen Bremsvorrichtungen wird Öl in die Spalte zwischen den Innen- und Außenlamellen zugeführt. Wenn im gelüfteten Zustand der Bremse die Innenlamellen relativ zu den Außenlamellen rotieren, wird das Öl in den Spalten geschert. Diese Scherung verursacht einen Leistungsverlust an der Welle, an der die Bremsvorrichtung montiert ist. Außerdem wird das Öl und unter Umständen sogar die gesamte Bremsvorrichtung erwärmt. Diese Erwärmung kann das Öl beschädigen, indem Crack-Produkte entstehen, die an den Reibflächen der Innen- und Außenlamellen haften und zu einer Minderung des Reibwerts bei einem Bremsvorgang führen. Die Bremswirkung kann somit beeinträchtigt werden, sodass ein Sicherheitsrisiko entstehen kann.

Es sind daher Bremsvorrichtungen mit einem Fluidspeicher aus dem Stand der Technik bekannt. Der Fluidspeicher ist in einer radialen Richtung relativ zur zu bremsenden Welle weiter von der an der Welle befestigten Nabe beabstandet als die Spalte, sodass bei einer Rotation der Welle im ungebremsten Zustand das Öl durch die Zentrifugalkraft aus den Spalten in den Fluidspeicher gedrückt wird. In den Spalten ist dann besonders wenig Öl angeordnet, sodass eine Scherung des Öls und die damit verbundenen nachteiligen Effekte verringert oder eliminiert werden.

Die US 3 946 840 A offenbart eine Kupplungsbaugruppe in der Bohrung eines Schwungrads, um eine koaxial angeordnete Welle antriebsmäßig zu verbinden. Die Baugruppe besteht aus einer ersten Reihe von Scheiben, die zur Drehung mit der Welle montiert sind, und einer zweiten Reihe von ineinandergreifenden Platten, die zur Drehung mit dem Schwungrad gelagert sind. Das Schwungrad ist mit der Antriebswelle verbunden und reagiert auf die Verschiebung einer Betätigungseinrichtung, die unter Druck mit den Scheiben und Platten in Eingriff steht. Eine separate Bremsanordnung ist vorgesehen, die an jedem axialen Ende der Welle angeordnet sein kann. Eine Hydraulikflüssigkeit wird sowohl durch die Kupplung als auch durch die Bremse aus einer gemeinsamen Quelle zirkuliert.

Die DE 30 34 190 A offenbart eine Bremseinheit, die in Verbindung mit Hebewerken eingesetzt werden kann und die als einzelne Einheit ausgebildet ist, welche in der Lage ist, sowohl die von der Hauptbremse als auch die von dem Betriebsregler ausgeführten Funktionen zu übernehmen, und die die Bohrausrüstung vor Beschädigungen aufgrund von Stromausfällen, Einbrüchen des Bohrers in unterirdische Hohlräume oder ähnlichen Fällen schützt.

Die DE 10 2014 115 238 A1 offenbart eine Pressenantriebsvorrichtung für eine Presse mit einem Pleuel, das ein Antriebsende und ein Abtriebsende aufweist. Eine Antriebswelle ist an einer ersten Lagerstelle mittels einer ersten Lagereinrichtung und an einer zweiten Lagerstelle mittels einer zweiten Lagereinrichtung drehbar um eine Wellenachse gelagert. Zwischen den beiden Lagerstellen weist die Antriebswelle ein exzentrisch gegenüber der Wellenachse angeordnetes Pleuellager auf. An dem Pleuellager ist das Antriebsende des Pleuels gelagert.

Demgegenüber liegt der vorliegenden Erfindung die Aufgabe zugrunde, eine Presse mit einer besonders kompakten Bremsvorrichtung zu schaffen.

Diese Aufgabe wird durch eine Presse gemäß Anspruch 1 gelöst. Ausführungsformen der Erfindung sind in den abhängigen Ansprüchen angegeben.

Die Presse gemäß Anspruch 1 umfasst ein System mit einer Bremsvorrichtung und ein unbewegliches Maschinenelement, einen Antrieb, ein Umformwerkzeug und eine Welle. Die Bremsvorrichtung umfasst eine Nabe, die an der Welle befestigt ist, zumindest eine mit der Nabe verbundene Innenlamelle, einen Mantel, einen Zahnkranz, mehrere mit dem Zahnkranz verbundene Außenlamellen und einen Fluidspeicher zur Aufnahme eines Fluids, beispielsweise eines Öls. Die Innenlamelle kann insbesondere an der Nabe befestigt sein. Die Außenlamellen können insbesondere am Zahnkranz befestigt sein. Der Mantel kann beispielsweise von außerhalb der Bremsvorrichtung sichtbar sein und einen Teil einer Außenwandung der Bremsvorrichtung bilden. Der Mantel kann auch als Gehäuse bezeichnet werden.

Die Innenlamelle ist zwischen den Außenlamellen angeordnet. Zwischen den Außenlamellen und der Innenlamelle ist ein Spalt angeordnet. Es ist auch möglich, dass die Bremsvorrichtung mehrere Innenlamellen umfasst. In diesem Fall kann jeweils eine Innenlamelle zwischen zwei Außenlamellen angeordnet sein, sodass mehrere Spalte zwischen den Außen- und Innenlamellen vorhanden sind. Die Spalte sind fluidisch mit dem Fluidspeicher verbunden. Hierunter wird im Rahmen dieser Beschreibung insbesondere verstanden, dass ein Fluid, insbesondere ein Öl, vom Fluidspeicher in die Spalte und umgekehrt strömen kann.

Der Fluidspeicher ist in einer radialen Richtung weiter entfernt von der Nabe angeordnet als die Spalte. Hierdurch wird erreicht, dass das Fluid bei einer Rotation der Innenlamellen relativ zu den Außenlamellen durch die Zentrifugalkraft in den Fluidspeicher gedrückt wird. Unter der radialen Richtung wird dabei im Rahmen dieser Beschreibung insbesondere eine radiale Richtung relativ zur geometrischen Rotationsachse der zu bremsenden Welle verstanden. Die radialen Richtungen können insbesondere senkrecht zur geometrischen Rotationsachse verlaufen.

Der Fluidspeicher ist in einer ersten axialen Richtung durch den Zahnkranz begrenzt. Beispielsweise kann der Fluidspeicher in der ersten axialen Richtung durch eine Stirnfläche des Zahnkranzes begrenzt sein. Unter der ersten axialen Richtung wird im Rahmen dieser Beschreibung insbesondere eine Richtung verstanden, die parallel zur geometrischen Rotationsachse der zu bremsenden Welle verläuft.

Aufgrund der Begrenzung des Fluidspeichers durch den Zahnkranz ist die Bremsvorrichtung besonders kompakt. Der Zahnkranz erfüllt somit zum einen die Funktion der Halterung der Außenlamellen und zum anderen die Begrenzung des Fluidspeichers. Daher wird kein weiteres Bauteil zur Begrenzung des Fluidspeichers benötigt.

Bei der Bremsvorrichtung kann es sich insbesondere um eine kompakte, geschlossene, nasslaufende Mehrflächenreibungsbremse mit Ölstauraum zur Reduzierung von Leerlaufmomenten und Erwärmung des Öls handeln.

Der Mantel ist am unbeweglichen Maschinenelement befestigt. Unter dem unbeweglichen Maschinenelement wird im Rahmen dieser Beschreibung insbesondere ein Maschinenelement - beispielsweise einer Presse - verstanden, das beim Betrieb der Maschine und insbesondere bei einem mittels der Bremsvorrichtung durchgeführten Bremsvorgang relativ zu einer Umgebung der Maschine, insbesondere zu einer Bodenoberfläche, auf der die Maschine angeordnet ist, unbeweglich ist. Der Mantel ist dann ebenfalls in diesem Sinne unbeweglich. Die Welle ist dazu ausgebildet, ein Drehmoment vom Antrieb zum Umformwerkzeug zu übertragen. Die Welle ist mittels der Bremsvorrichtung bremsbar. Bei dem Umformwerkzeug kann es sich beispielsweise um ein Werkzeug handeln, das mittels des über die Welle übertragenen Drehmoments zum Umformen von Bauteilen genutzt wird. Beispielsweise kann das Umformwerkzeug aus zwei Teilen bestehen, die abwechselnd voneinander entfernt und aufeinander gepresst werden. Der Antrieb kann beispielsweise als Servo-Antrieb ausgebildet sein.

Der Zahnkranz bildet einen äußeren Abschluss der Bremsvorrichtung. Auch dies ermöglicht eine besonders kompakte Bauweise der Bremsvorrichtung. Hierunter wird im Rahmen dieser Beschreibung insbesondere verstanden, dass ein Großteil einer Stirnfläche des Zahnkranzes von außerhalb der Bremsvorrichtung sichtbar ist.

Es ist möglich, dass die Bremsvorrichtung ein Kraftausübungsmittel umfasst, das dazu ausgebildet ist, eine Kraft auf die Innen- und/oder Außenlamellen auszuüben, sodass die Innen- und Außenlamellen zusammengedrückt werden und die Spalte nicht mehr vorhanden sind. Auf diese Weis lässt sich die Bremswirkung erzielen.

Im Zahnkranz sind Bohrungen oder Nuten angeordnet, die den Fluidspeicher mit den Spalten fluidisch verbinden. Es ist insbesondere möglich, dass der Fluidspeicher ausschließlich über die Bohrungen oder Nuten im Zahnkranz mit den Spalten fluidisch verbunden ist. Eine geometrische Längsachse der Bohrungen kann sich beispielsweise jeweils in der radialen Richtung erstrecken.

Nach einer Ausführungsform der Erfindung kann im Fluidspeicher ein Öl angeordnet sein.

Nach einer Ausführungsform der Erfindung kann der Fluidspeicher in der radialen Richtung durch den Mantel begrenzt sein. Dies ist insbesondere vorteilhaft, für eine besonders kompakte Bauweise der Bremsvorrichtung. Es wird nämlich für die Begrenzung in der radialen Richtung kein weiteres Bauteil benötigt.

Nach einer Ausführungsform der Erfindung kann der Fluidspeicher in einer zweiten axialen Richtung durch den Mantel begrenzt sein. Die zweite axiale Richtung kann dabei der ersten axialen Richtung entgegengesetzt sein. Auch dies ist vorteilhaft für eine besonders kompakte Bauweise.
Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:

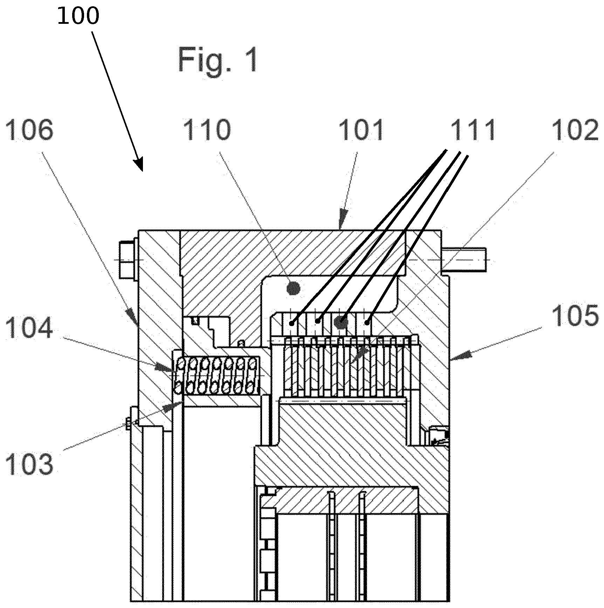

- Fig. 1: eine schematische Schnittansicht einer Bremsvorrichtung nach einer Ausführungsform der Erfindung.

Die Bremsvorrichtung 100 in Fig. 1 umfasst einen Mantel 101, ein Lamellenpaket 102 mit mehreren Innenlamellen und mehreren Außenlamellen, einen Kolben 103, eine Feder 104, einen Zahnkranz 105, einen Deckel 106 und einen Fluidspeicher 110. Im Zahnkranz 105 sind Bohrungen 111 angeordnet, die den Fluidspeicher 110 mit Spalten zwischen den Innen- und den Außenlamellen fluidisch verbinden.

Die Bremsvorrichtung 100 umfasst außerdem eine Nabe, mit der sie an einer zu bremsenden Welle befestigt werden kann. Im Betrieb befindet sich ein Fluid, beispielsweise ein Öl, im Fluidspeicher 110. Aufgrund der fluidischen Verbindung des Fluidspeichers 110 mit den Spalten zwischen den Innen- und Außenlamellen kann das Fluid zwischen dem Fluidspeicher 110 und den Spalten hin und her strömen. Es handelt sich somit um eine nasslaufende Bremsvorrichtung.

Wenn die Nabe aufgrund ihrer Befestigung an einer Welle rotiert, rotieren die Innenlamellen mit. Im ungebremsten Zustand stehen die Außenlamellen still. Aufgrund der Zentrifugalkraft wird dann das Fluid aus den Spalten durch die Bohrungen 111 in den Fluidspeicher 110 gedrückt. Es verbleibt somit nur wenig Fluid in den Spalten, das geschert und somit erwärmt und/oder beschädigt werden kann. Außerdem entstehen keine oder nur geringe Schleppmomente.

Wenn gebremst werden soll, wird das Lamellenpaket 102 durch den Kolben 103 zusammengepresst, sodass die Außen- und Innenlamellen aneinander reiben, wobei sie währenddessen mit dem Fluid geschmiert sind. Die hierfür benötigte Kraft wird durch die Feder 104 aufgebracht, die sich am Deckel 106 abstützt.

Der Fluidspeicher 110 wird in einer radialen Richtung durch den Mantel 101 begrenzt. Der Mantel 101 stellt außerdem ein Gehäuse der Bremsvorrichtung 100 dar. Eine Außenfläche des Mantels 101 ist von außerhalb der Bremsvorrichtung 100 sichtbar. Der Mantel 101 erfüllt somit zum einen die Funktion eines Gehäuses und zum anderen begrenzt er den Fluidspeicher 110 in der radialen Richtung. Es werden somit besonders wenige Bauteile benötigt. Außerdem kann die Bremsvorrichtung 100 besonders kompakt gebaut werden.

In einer ersten axialen Richtung wird der Fluidspeicher 110 durch eine Stirnseite des Zahnkranzes 105 begrenzt. Am Zahnkranz 105 sind außerdem die Außenlamellen direkt befestigt. Zudem führen die Bohrungen 111 durch den Zahnkranz 105. Der Zahnkranz 105 ist von außerhalb der Bremsvorrichtung 100 sichtbar. Auch der Zahnkranz 105 erfüllt somit gleichzeitig mehrere Funktionen. Auch dies führt zu einer besonders kompakten Bauweise der Bremsvorrichtung mit wenigen Bauteilen.

In einer zweiten axialen Richtung, die der ersten axialen Richtung entgegengesetzt ist, wird der Fluidspeicher 110 durch den Mantel 101 begrenzt. Für diese Begrenzung wird somit kein gesondertes Bauteil benötigt, wodurch die Bauweise der Bremsvorrichtung 100 noch kompakter gestaltet ist.

## Patentansprüche

1. Presse, umfassend ein System, das eine Bremsvorrichtung (100) und ein unbewegliches Maschinenelement umfasst, einen Antrieb, ein Umformwerkzeug und eine Welle, wobei die Bremsvorrichtung (100)
- eine Nabe, die an der Welle befestigt ist,
- zumindest eine mit der Nabe verbundene Innenlamelle,
- einen Mantel (101),
- einen Zahnkranz (105),
- mehrere mit dem Zahnkranz (105) verbundene Außenlamellen und
- einen Fluidspeicher (110) zur Aufnahme eines Fluids umfasst,
wobei die Innenlamelle zwischen den Außenlamellen angeordnet ist, wobei zwischen der Innenlamelle und den Außenlamellen jeweils ein Spalt angeordnet ist, wobei die Spalte fluidisch mit dem Fluidspeicher (110) verbunden sind, wobei der Fluidspeicher (110) in einer radialen Richtung weiter entfernt von der Nabe angeordnet ist als die Spalte, wobei der Fluidspeicher (110) in einer ersten axialen Richtung durch den Zahnkranz (105) begrenzt ist, wobei der Mantel (101) am unbeweglichen Maschinenelement befestigt ist, wobei die Welle dazu ausgebildet ist, ein Drehmoment vom Antrieb zum Umformwerkzeug zu übertragen, wobei die Welle mittels der Bremsvorrichtung (100) bremsbar ist, wobei der Zahnkranz (105) einen äußeren Abschluss der Bremsvorrichtung bildet, und wobei im Zahnkranz (105) Bohrungen (111) oder Nuten angeordnet sind, die den Fluidspeicher (110) mit den Spalten fluidisch verbinden.

2. Presse (100) nach Anspruch 1, **dadurch gekennzeichnet, dass** im Fluidspeicher (110) ein Öl angeordnet ist.

3. Presse (100) nach einem der vorherigen Ansprüche, **dadurch gekennzeichnet, dass** der Fluidspeicher (110) in der radialen Richtung durch den Mantel (101) begrenzt ist.

4. Presse (100) nach einem der vorherigen Ansprüche, **dadurch gekennzeichnet, dass** der Fluidspeicher (110) in einer zweiten axialen Richtung durch den Mantel (101) begrenzt ist.

## Claims

1. A press comprising a system comprising a braking device (100) and a stationary machine element, a drive, a forming tool and a shaft, wherein the braking device (100) comprises
- a hub fixed to the shaft,
- at least one inner blade connected to the hub,
- a shell (101),
- a ring gear (105),
- a plurality of outer blades connected to the ring gear (105) and
- a fluid reservoir (110) for receiving a fluid,
wherein the inner blade is arranged between the outer blades, wherein a gap is arranged in each case between the inner blade and the outer blades, wherein the gaps are fluidically connected to the fluid reservoir (110), wherein the fluid reservoir (110) is arranged further away from the hub in a radial direction than the gaps, wherein the fluid reservoir (110) is delimited in a first axial direction by the ring gear (105), wherein the shell (101) is fastened to the stationary machine element, wherein the shaft is designed to transmit a torque from the drive to the forming tool, wherein the shaft can be braked by means of the braking device (100), wherein the ring gear (105) forms an outer termination of the braking device, and wherein bores (111) or grooves are arranged in the ring gear (105) and fluidically connect the fluid reservoir (110) to the gaps.

2. The press (100) according to claim 1, **characterized in that** an oil is arranged in the fluid reservoir (110).

3. The press (100) according to one of the preceding claims, **characterized in that** the fluid reservoir (110) is delimited in the radial direction by the shell (101).

4. The press (100) according to one of the preceding claims, **characterized in that** the fluid reservoir (110) is delimited in a second axial direction by the shell (101).

## Revendications

1. Presse comprenant un système comprenant un dispositif de freinage (100) et un élément de machine fixe, un entraînement, un outil de formage et un arbre, le dispositif de freinage (100) comprenant
- un moyeu fixé à l'arbre,
- au moins une lamelle interne reliée au moyeu,
- une enveloppe (101),
- une couronne dentée (105),
- plusieurs lamelles externes reliées à la couronne dentée (105) et
- un réservoir de fluide (110) destiné à recevoir un fluide,
la lamelle interne étant disposée entre les lamelles externes, une fente étant disposée à chaque fois entre la lamelle interne et les lamelles externes, les fentes étant reliées fluidiquement au réservoir de fluide (110), le réservoir de fluide (110) étant disposé dans une direction radiale plus loin du moyeu que les fentes, le réservoir de fluide (110) étant limité dans une première direction axiale par la couronne dentée (105), l'enveloppe (101) étant fixée à l'élément de machine fixe, l'arbre étant réalisé pour transmettre un couple de rotation de l'entraînement à l'outil de formage, l'arbre pouvant être freiné au moyen du dispositif de freinage (100), la couronne dentée (105) formant une terminaison externe du dispositif de freinage, et des alésages (111) ou des rainures étant disposés dans la couronne dentée (105), lesquels relient fluidiquement le réservoir de fluide (110) aux fentes.

2. Presse (100) selon la revendication 1, **caractérisée en ce qu'**une huile est disposée dans le réservoir de fluide (110).

3. Presse (100) selon l'une quelconque des revendications précédentes, **caractérisée en ce que** le réservoir de fluide (110) est limité dans la direction radiale par l'enveloppe (101).

4. Presse (100) selon l'une quelconque des revendications précédentes, **caractérisée en ce que** le réservoir de fluide (110) est limité dans une deuxième direction axiale par l'enveloppe (101).
